# EUROPÄISCHE PATENTSCHRIFT

(11) **EP 4 368 367 B1**
(45) Veröffentlichungstag und Bekanntmachung des Hinweises auf die Patenterteilung: **08.04.2026**
(21) Anmeldenummer: 22206802.5
(22) Anmeldetag: 10.11.2022
(51) Int. Cl.: B29C 51/24

(54) **TIEFZIEHVORRICHTUNG, VERPACKUNGSMASCHINE MIT EINER TIEFZIEHVORRICHTUNG UND VERFAHREN ZUM BETRIEB DER TIEFZIEHVORRICHTUNG**
DEEP DRAWING DEVICE, PACKAGING MACHINE WITH A DEEP DRAWING DEVICE AND METHOD FOR OPERATING THE DEEP DRAWING DEVICE
DISPOSITIF D'EMBOUTISSAGE PROFOND, MACHINE D'EMBALLAGE DOTÉE D'UN DISPOSITIF D'EMBOUTISSAGE PROFOND ET PROCÉDÉ DE FONCTIONNEMENT DU DISPOSITIF D'EMBOUTISSAGE PROFOND

(43) Veröffentlichungstag der Anmeldung: 15.05.2024
(73) Patentinhaber: Harro Höfliger Verpackungsmaschinen GmbH, 71573 Allmersbach im Tal (DE)
(72) Erfinder: Luka, Jürgen, 71573 Allmersbach im Tal (DE); Marbaz, Jens, 71573 Allmersbach im Tal (DE); Schirmer, Olaf, 71573 Allmersbach im Tal (DE)
(74) Vertreter: Zurhorst, Stefan

(56) Entgegenhaltungen:
- CN-A- 111 941 808
- US-A- 3 766 702
- US-A1- 2021 276 754

## Beschreibung

Die Erfindung betrifft eine Tiefziehvorrichtung mit den Merkmalen nach dem Oberbegriff des Anspruchs 1 und eine Verpackungsmaschine zur Herstellung von gefüllten Beuteln mit einer solchen Tiefziehvorrichtung sowie ein Verfahren zum Betrieb der Tiefziehvorrichtung.

In verbreiteter Ausführung (z.B. US 2021/276754 A1) werden Verpackungseinheiten häufig dadurch hergestellt, dass zunächst Folien tiefgezogen werden. In die hierbei entstehenden Kavitäten wird ein Produkt eingefüllt, woran anschließend eine Versiegelung mit einer Deckfolie erfolgt. Es entsteht ein doppellagiger Folienstreifen, in dem Teilmengen des Produktes voneinander abgegrenzt sind. Diese Teilmengen werden abschließend in einer Schneidstation vereinzelt.

Selbstverständlich muss bei der Herstellung von derartigen Verpackungseinheiten sichergestellt werden, dass die Folie der Verpackungseinheit äußeren Belastungen standhält, so dass das verpackte Produkt ausreichend geschützt ist. Wurde während des Herstellungsprozesses von Verpackungseinheiten festgestellt, dass die Folie eingerissen ist oder sich partiell derart ausgedünnt hat, dass die Folie undicht ist, wurde bisher die Folienstärke erhöht. Auch eine Anpassung der Formprozessparameter, wie beispielsweise die Vorheiztemperatur oder Vorheizen der Folien, kann vorgenommen werden. Dadurch können Fehlstellen in der Folienverpackung vermieden werden. Die Verwendung einer dickeren Folie kann jedoch zu einer erhöhten Umweltbelastung führen. Zudem haben die erforderlichen Anpassungen auch eine Erhöhung der Herstellungskosten zur Folge.

Ein weiterer Nachteil der aus dem Stand der Technik bekannten Verpackungsmaschinen stellt sich insbesondere bei der Verwendung von wasserlöslichen Folien ein. Wasserlösliche Folien, wie PVOH-Folien, sind aus dem Stand der Technik hinreichend bekannt und kommen insbesondere bei der Verpackung von Waschmitteln, beispielsweise im Einsatz für Spülmaschinen oder Waschmaschinen, zum Tragen. Die Verpackungseinheiten werden in die entsprechende Maschine gelegt und mit Wasser umspült. Sobald sich die Folie auflöst, wird das Waschmittel freigesetzt. Die Verwendung einer erhöhten Folienstärke verursacht wiederum eine Erhöhung der Auflösezeit der Verpackungseinheit. Des Weiteren wurden äußerst unregelmäßige, nicht reproduzierbare Auflösezeiten der Verpackungseinheiten festgestellt.

Folglich ist es Aufgabe der Erfindung, eine Tiefziehvorrichtung anzugeben, die eine prozesssichere, umweltschonende und zugleich auch günstige Herstellung von gefüllten Folienbeuteln ermöglicht.

Diese Aufgabe wird durch eine Tiefziehvorrichtung mit den Merkmalen des Anspruchs 1 gelöst.

Eine weitere Aufgabe der Erfindung ist es, eine Verpackungsmaschine anzugeben, die eine prozesssichere, umweltschonende und zugleich auch günstige Herstellung von gefüllten Folienbeuteln ermöglicht.

Diese weitere Aufgabe wird durch eine Verpackungsmaschine mit den Merkmalen des Anspruchs 11 gelöst.

Eine weitere Aufgabe der Erfindung besteht darin, ein Verfahren zum Tiefziehen von Folie zur Herstellung von Folienverpackungen anzugeben, das eine prozesssichere, umweltschonende und zugleich auch günstige Herstellung von gefüllten Folienbeuteln ermöglicht.

Die weitere Aufgabe wird durch ein Verfahren mit den Merkmalen des Anspruchs 12 gelöst.

Der Erfindung liegt die Erkenntnis zugrunde, dass die unregelmäßigen Auflösezeiten der wasserlöslichen Folien zumindest zu großen Teilen auf eine ungleichmäßige Folienstärke zurückzuführen ist. Ferner konnte festgestellt werden, dass die ungleichmäßige Folienstärke während des Tiefziehens der Folie entsteht. Kunststofffolien weisen heterogene Materialeigenschaften auf, die sich wiederum auf die Verformungseigenschaften eines Kunststoffes auswirken. So weisen Kunststofffolien lokal verschiedene Elastizitätsmodule sowie lokal verschiedene Dehnratenabhängigkeiten auf. Es wurde nun erkannt, dass diese lokal verschiedenen Materialeigenschaften der Kunststofffolie zu lokal verschiedenen Ausdünnungen führen. Ferner sind lokale Ausdünnungen auch auf die Streckung der Folie zurückzuführen, die sich im Wesentlichen in Abhängigkeit von der Werkzeuggeometrie einstellt.

Es hat sich herausgestellt, dass mit einer reduzierten Tiefziehgeschwindigkeit die Ausdünnung der Kunststofffolie homogenisiert wird. Ferner wird davon ausgegangen, dass sich die Struktur der Kunststofffolie bei reduzierter Dehnrate auf übermolekularer Strukturebene besser ausrichten kann, wodurch sich die Materialeigenschaften während des Tiefziehens homogenisieren. Daher sieht die erfindungsgemäße Tiefziehvorrichtung eine Formvakuumeinrichtung vor, mittels deren der an der Matrizenmulde anliegende Druck während des Tiefziehens kontinuierlich einstellbar ist. Dadurch kann auch die Tiefziehgeschwindigkeit eingestellt werden.

Hierfür ist die erfindungsgemäße Tiefziehvorrichtung zum Tiefziehen von Folie vorgesehen, umfassend eine Anordnung von mehreren Matrizenplatten, die durch einen Transporteur in einer Umlaufbahn antreibbar ist, wobei jede Matrizenplatte mindestens eine Matrizenform aufweist, und mit mindestens einer Formvakuumeinrichtung, wobei die Formvakuumeinrichtung mindestens eine Vakuumquelle zur Bereitstellung eines Vakuums umfasst, und wobei die mindestens eine Vakuumquelle über einen Vakuumkanal mit der mindestens einen Matrizenform einer jeden Matrizenplatte verbindbar ist, wobei die Formvakuumeinrichtung mindestens eine der Vakuumquelle zugeordnete Schalteinheit umfasst, wobei die Schalteinheit ein funktional zwischen der Vakuumquelle und der mindestens einen Matrizenform angeordnetes Ventil umfasst, und wobei die Schalteinheit in einer ersten Variante derart ausgebildet ist, dass der an der mindestens einen Matrizenform anliegende Druck durch die Schalteinheit kontinuierlich einstellbar ist und dass die Schalteinheit in einer zweiten Variante einen funktional zwischen dem Ventil und der mindestens einen Matrizenform angeordneten Vakuumtank umfasst.

Mittels der ersten Variante der Schalteinheit kann der Druck an der Matrizenform während des Tiefziehvorgangs kontinuierlich eingestellt werden. Mittels der zweiten Variante der Schalteinheit wird durch den hinter das Ventil geschalteten Vakuumtank ein deutlich langsamerer Druckaufbau an der Matrizenform eingestellt. Beide Varianten der Schalteinheit haben gemein, dass der Druckverlauf an der Matrizenform derart eingestellt werden kann, dass die Folie mit einer reduzierten Tiefziehgeschwindigkeit tiefgezogen werden kann. Der Druckverlauf wird durch die Schalteinheit derart angepasst, dass die Folie mit einer reduzierten Dehnrate geformt wird und dabei eine gleichmäßige Ausdünnung erfährt. Die Verwendung einer Folie mit erhöhter Folienstärke zur Vermeidung eines Materialversagens ist nicht mehr erforderlich. Auf diese Weise können die Verpackungseinheiten auf umweltfreundliche und kostengünstige Weise hergestellt werden. Durch die gezielte und gleichmäßige Ausdünnung der Folien beim Tiefziehen kann auch die Auflösezeit der Folien, insbesondere der PVOH-Folien, im Wasser prozesssicher und reproduzierbar eingestellt werden.

Es ist bevorzugt vorgesehen, dass die Schalteinheit eine Steuereinrichtung aufweist, wobei das Ventil durch die Steuereinrichtung über eine gepulste Signalfolge angesteuert wird. Eine gepulste Signalfolge kann beispielsweise in Form einer Pulsweitenmodulation und/oder einer Frequenzmodulation erzeugt werden. Durch eine derartige Ansteuerung des Ventils kann dieses auch als diskret schaltendes Ventil, insbesondere als diskret schaltendes Wegeventil ausgebildet sein. Ein solches diskret schaltendes Wegeventil weist lediglich zwei Schaltstellungen auf, nämlich eine offene Stellung und eine geschlossene Stellung. Ist das Ventil in die offene Stellung geschaltet, ist eine Strömungsverbindung freigegeben, d.h. der Strömungsquerschnitt des Ventils ist maximal. Ist das Ventil in eine geschlossene Stellung geschaltet, ist die Strömungsverbindung unterbunden, d.h. der Strömungsquerschnitt des Ventils ist minimal. Durch die Ansteuerung des Ventils mit der gepulsten Signalfolge wird durch den schnellen Wechsel der Schaltstellungen des Ventils eine effektive Schaltstellung, also eine Art durchschnittliche Schaltstellung, eingestellt. Über die effektive Schaltstellung kann der Durchfluss des Mediums und damit auch der Druck in der Matrizenform eingestellt werden. Die Signalfolge weist mehrere Betriebsimpulse auf, wobei besonders vorteilhaft eine effektive Schaltstellung des Ventils kontinuierlich über die Variation der Signaldauer der Betriebsimpulse und/oder über die Variation der Frequenz der Signalfolge einstellbar ist.

Es ist vorteilhaft vorgesehen, dass das Ventil als ein Stetigventil ausgebildet ist. Ein Stetigventil zeichnet sich durch kontinuierlich veränderbare Schaltstellungen auf. Demnach ist der Strömungsquerschnitt des Stetigventils und damit auch der Druck an der Matrizenform kontinuierlich veränderbar. Hierfür ist es nicht erforderlich, das Stetigventil gepulst anzusteuern. Es kann in einer vorteilhaften Ausführung der Tiefziehvorrichtung jedoch auch vorgesehen sein, das Stetigventil gepulst über die Steuereinrichtung anzusteuern.

In einer bevorzugten Ausführung ist das Stetigventil ein Druckventil, ein Drosselventil oder ein Stromregelventil. Besonders bevorzugt ist das Stetigventil ein Wegeventil. Das Wegeventil ist besonders bevorzugt als Proportionalventil ausgebildet. Es kann alternativ auch vorgesehen sein, das Wegeventil als Regelventil oder als Servoventil auszubilden.

Es ist insbesondere vorgesehen, dass die Formvakuumeinrichtung einen der ersten Variante der Schalteinheit zugeordneten Vakuumtank aufweist. Der Vakuumtank kann in einer Ausführung der Tiefziehvorrichtung funktional zwischen der Vakuumquelle und dem Ventil angeordnet sein. Die Vakuumquelle bildet folglich in dem Vakuumtank einen Unterdruck, der beim Tiefziehen der Folie über das Ventil der Matrizenform zugeschaltet wird. In einer solchen funktionalen Anordnung des Vakuumtanks ist diesem als Hauptfunktion das Speichern von Vakuum beizumessen.

In einer alternativen Ausführung der Tiefziehvorrichtung ist bevorzugt der der ersten Variante der Schalteinheit zugeordnete Vakuumtank funktional zwischen dem Ventil und der mindestens einen Matrizenform angeordnet. Soll an der Matrizenform ein Vakuum angelegt werden, ist eine Strömungsverbindung zwischen der Vakuumquelle und der Matrizenform durch das Ventil freizugeben. Um ausreichend Vakuum an der Matrizenform bereitzustellen, muss auch im Vakuumtank ein entsprechender Unterdruck erzeugt werden. Der Vakuumtank bildet somit neben der Matrizenform ein zusätzliches Volumen, so dass die Erzeugung des Vakuums an der Matrizenform verlangsamt wird. Der unregelmäßige Druckverlauf an der Matrizenform, der sich durch eine gepulste Ansteuerung des Ventils mittels der Steuereinrichtung ergibt, wird durch den Vakuumtank zudem noch geglättet.

Das erfindungsgemäße Verfahren zum Tiefziehen von Folie zur Herstellung von Folienverpackungen mit einer erfindungsgemäßen Verpackungsmaschine umfasst die folgenden Schritte:
- Mindestens einer Matrizenplatte wird eine Folie zugeführt, wobei mit Beginn des Tiefziehvorgangs ein Startdruck in der Matrizenform anliegt, wobei der Startdruck in einem Bereich von 1,0 bar bis 0,8 bar liegt,
- während des Tiefziehvorganges der Folie wird durch die Schalteinheit der Formvakuumeinrichtung ein Druckverlauf an der Matrizenform generiert, in dem der Druck an der Matrizenform ausgehend von dem Startdruck innerhalb einer Zeitspanne auf einen minimalen Enddruck reduziert wird, wodurch die Folie in die Matrizenform der Matrizenplatte tiefgezogen wird, und wobei der Enddruck in einem Bereich von 0,05 bar bis 0,5 bar, vorzugsweise in einem Bereich von 0,1bar bis 0,4bar, vorzugsweise in einem Bereich von 0, 15bar bis 0,35bar liegt, und wobei die Zeitspanne zwischen dem Startdruck und dem Enddruck mindestens 0,5s, vorzugsweise mindestens 0,75s, besonders bevorzugt mindestens 1,0s, vorteilhaft mindestens 1,25s, besonders vorteilhaft mindestens 1,5s beträgt.

Bevorzugt ist die Zeitspanne zwischen dem Startdruck und dem Enddruck nicht größer als 2,0s, vorzugsweise nicht größer als 1,75s, bevorzugt nicht größer als 1,5s ist. Diese Grenzwerte stellen übliche Taktzeiten einer entsprechenden Verpackungsmaschine dar.

Durch die vergleichsweise langsame Erzeugung des Unterdrucks an der Matrizenform wird auch die Folie mit einer derart geringen Tiefziehgeschwindigkeit tiefgezogen, dass die Folie sich gleichmäßig ausdünnt. Risse oder andere Beschädigungen an der Folie werden somit vermieden. Eine prozesssichere, umweltfreundliche und zugleich kostengünstige Herstellung von Verpackungseinheiten ist gewährleistet.
- Fig. 1: in einer seitlichen Ausschnittsdarstellung eine erfindungsgemäß ausgeführte Verpackungsmaschine mit einem kontinuierlich umlaufend bewegten Transporteur sowie mit zyklisch mitbewegten Form-, Füll- und Siegelstationen,
- Fig. 2: in einer schematischen Darstellung eine Ausführung der Formvakuumvorrichtung mit diskret schaltendem Ventil und Vakuumtank verbunden mit einer Matrizenplatte und
- Fig. 3: in einer schematischen Darstellung eine Ausführung der Formvakuumvorrichtung mit stetig schaltendem Ventil mit Matrizenplatte.

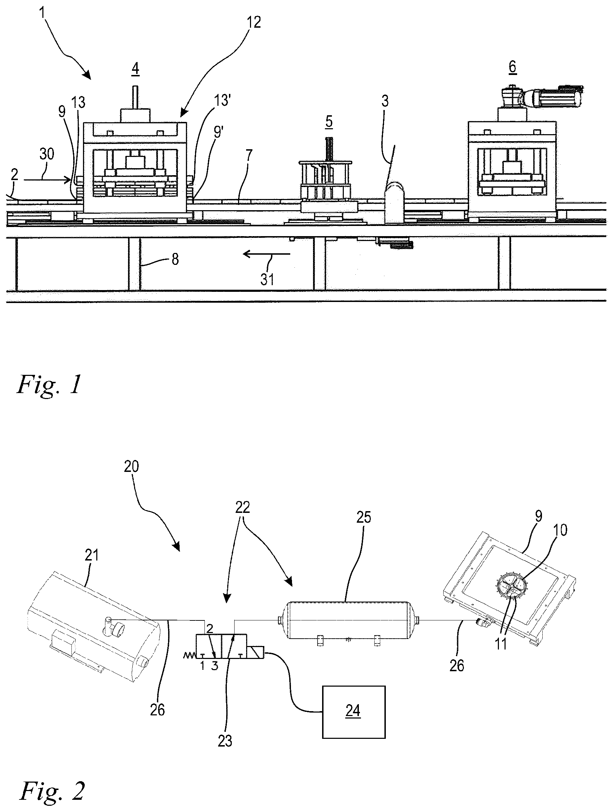

Fig. 1 zeigt in einer Seitenansicht einen Ausschnitt aus einer erfindungsgemäßen Verpackungsmaschine 1 zur Herstellung von gefüllten Beuteln. Hierzu umfasst die Verpackungsmaschine 1 ein Maschinengestell 8, eine Formstation 4, eine Füllstation 5 und eine Siegelstation 6. Eine Folie 2 wird der Verpackungsmaschine 1 zugeführt und in der Formstation 4 tiefgezogen, so dass sich in der Folie 2 Kavitäten ausbilden. Die Folie ist im vorliegenden Ausführungsbeispiel als Folienbahn ausgebildet. Es kann auch zweckmäßig sein, der Verpackungsmaschine einzelne Folienblätter zuzuführen.

Die Kavitäten werden in der Füllstation 5 mit einem Produkt befüllt. Hieran anschließend wird eine Deckfolie 3 zugeführt und in der Siegelstation 6 auf die Folie 2 aufgesiegelt, wobei die befüllten Kavitäten verschlossen werden. In einer nicht dargestellten Schneidestation wird die solchermaßen gebildete Folieneinheit zu Folienbeuteln vereinzelt. Im Ausführungsbeispiel handelt es sich bei der Folie 2 und bei der Deckfolie 3 um wasserlösliche Folien, namentlich um PVOH-Folien, zwischen denen beispielsweise ein Wasch- oder Reinigungsmittel verpackt wird. Solchermaßen hergestellte gefüllte Folienbeutel werden beispielsweise in eine Spülmaschine eingelegt. Dort löst sich das Folienmaterial bei Wasserkontakt auf und gibt das enthaltene Spülmittel frei. Sinngemäß das Gleiche gilt für den Einsatz eines solchen Folienbeutels in einer Waschmaschine.

Die Verpackungsmaschine 1 umfasst ein ortsfest montiertes Maschinengestell 8 sowie einen bevorzugt kontinuierlich angetriebenen Transporteur 7. Der Transporteur 7 kann ein Förderband oder dergleichen sein und ist im bevorzugten Ausführungsbeispiel durch gelenkig und kettenartig miteinander verbundene Elemente gebildet, auf denen mehrere Matrizenplatten 9, 9' montiert sind. Letztere werden zusammen mit dem Transporteur 7 bevorzugt kontinuierlich und um das Maschinengestell 8 umlaufend angetrieben, wobei sie sich für den eigentlichen Herstellvorgang der Beutel auf einer oberen horizontalen Bahn entsprechend einem Pfeil 30 bewegen und nach entsprechender Umlenkung anschließend im unteren Bereich des Maschinengestells 8 entsprechend einem Pfeil 31 zurückgeführt werden. Ebenso bevorzugt kontinuierlich wird die Folie 2, bevorzugt endlose Folienbahn, zugeführt und von oben auf den Transporteur 7 mit den Matrizenplatten 9, 9' aufgelegt. Zwischen der Füllstation 5 und der Siegelstation 6 wird später noch die Deckfolie 3 bevorzugt kontinuierlich zugeführt und von oben auf die Oberseite der Folie 2 aufgelegt. Die Folie 2 und die Deckfolie 3 werden im aufgelegten Zustand entsprechend dem Pfeil 30 synchron und bevorzugt kontinuierlich mit dem Transporteur 7 mitbewegt.

Die Station zur Zufuhr der Folie 2 sowie die Station zur Zufuhr der Deckfolie 3 sind ortsfest gegenüber dem Maschinengestell 8 ausgebildet, ebenso wie nicht dargestellte Stationen für Wasserauftrag zur Unterstützung des Siegelvorgangs sowie für das Perforieren bzw. seitliche Beschneiden der Folien. Es kann auch vorgesehen sein, dass die Stationen zumindest teilweise an dem Maschinengestellt 8 befestigt sind. In der bevorzugten Ausführung der Verpackungsmaschine 1 ist die Bewegung des Transporteurs 7 kontinuierlich. In einer solchen Ausführung der Verpackungsmaschine 1 arbeiten die hier durchgeführten Prozesse ebenso kontinuierlich. Um eine kontinuierliche Bewegung ausführen zu können, sind die Formstation 4, die Füllstation 5 und die Siegelstation 6 nicht ortsfest relativ zum Maschinengestell 8 positioniert, sondern werden abschnittsweise über eine bestimmte Wegstrecke synchron mit dem Transporteur 7 mitgefahren. Währenddessen erfolgt in der Formstation 4 das Tiefziehen der Folie 2, in der Füllstation 5 das Einfüllen des zu verpackenden Produkts in die tiefgezogenen Kavitäten und in der Siegelstation 6 das Aufsiegeln der Deckfolie 3 auf die untere Folie 2 im Bereich der Siegelstege der Kavität. Nach Beendigung des jeweiligen Vorganges werden die Formstation 4, die Füllstation 5 und die Siegelstation 6 zyklisch wieder zurück auf ihre Ausgangsposition verfahren, wo dann ein neuer Zyklus des jeweils ausgeführten Prozesses beginnt.

Wie in Fig. 1 gezeigt ist die Formstation 4 durch eine Tiefziehvorrichtung 12 gebildet. Die Tiefziehvorrichtung 12 kann dazu ausgelegt sein, nur eine einzelne Matrizenplatte 9, 9' aufzunehmen und dort die Folie 2 in einem Zyklus tiefzuziehen. Im gezeigten Ausführungsbeispiel ist die Tiefziehvorrichtung 12 zur gleichzeitigen Aufnahme von mehreren, hier zwei aufeinanderfolgenden Matrizenplatten 9, 9' ausgelegt.

Wie in Fig. 2 gezeigt, weist eine einzelne Matrizenplatte 9, 9' auf ihrer Oberseite jeweils mindestens eine Matrizenform 10, insbesondere mehrere Matrizenformen 10 auf. Im vorliegenden, bevorzugten Ausführungsbeispiel sind vier Matrizenformen auf einer jeden Matrizenplatte 9 vorgesehen. Jede Matrizenform 10 ist mit mindestens einer Kapillarbohrung 11, vorzugsweise mehreren Kapillarbohrungen 11 versehen. Die Kapillarbohrungen 11 sind Teil eines Vakuumkanals 26, über welchen die Formmulden 10 mit einer Vakuumquelle 21 verbunden sind.

Fig. 2 zeigt eine Formvakuumstation 20, die Teil der Tiefziehvorrichtung 12 ist (Fig. 1). Die Formvakuumstation 20 umfasst eine Vakuumquelle 21, eine Schalteinheit 22 und einen Vakuumkanal 26. Die Vakuumquelle 21 ist bevorzugt als Vakuumpumpe ausgebildet. Die Vakuumquelle 21 ist über den Vakuumkanal 26 mit der Matrizenform 10 der Matrizenplatte 9 verbunden. Die Schalteinheit 22 umfasst ein Ventil 23. Das Ventil 23 ist funktional zwischen der Vakuumquelle 21 und der Matrizenmulde 10 angeordnet. Das Ventil 23 gibt in seiner Offenstellung die Strömungsverbindung zwischen der Vakuumquelle 21 und der Matrizenmulde 10 frei, wodurch ein Vakuum bzw. ein Unterdruck an der Matrizenmulde 10 erzeugt wird. Mittels des Vakuums an der Matrizenmulde 10 wird die Folie 2 in die Matrizenmulde 10 tiefgezogen. Während des Tiefziehens wird die Folie 2 durch eine auf der Matrizenplatte 9, 9' aufliegende Druckplatte 13, 13' gegen die Matrizenplatte 9, 9' geklemmt gehalten. In der Schließstellung des Ventils 23 sperrt das Ventil 23 die Strömungsverbindung zwischen der Vakuumquelle 21 und der Matrizenmulde 10. Dadurch reduziert sich das an der Matrizenmulde 10 anliegende Vakuum.

Wie in Fig. 2 gezeigt, ist das Ventil 23 als ein diskret schaltendes Ventil 23 ausgebildet. Das Ventil 23 weist lediglich eine geöffnete Stellung mit einem freigegebenen, maximalen Strömungsquerschnitt und eine vollständig geschlossene Stellung auf. Somit weist das Ventil 23 lediglich eine geöffnete Stellung mit einem freigegebenen, maximalen Strömungsquerschnitt und eine vollständig geschlossene Stellung auf. Das Ventil 23 ist als ein Wegeventil, insbesondere als ein 3/2-Wegeventil ausgebildet. Das Ventil 23 wird bevorzugt über eine Steuereinrichtung 24 der Formvakuumeinrichtung 20 geschaltet.

Wie in Fig. 2 gezeigt, umfasst die Formvakuumeinrichtung 20 einen Vakuumtank 25. Der Vakuumtank 25 ist funktional zwischen dem Ventil 23 und der Matrizenform 10 angeordnet. Bei der Erzeugung eines Vakuums an der Matrizenform 10 führt der Vakuumtank 25 zu einer Erhöhung der Zeitspanne, bis der Enddruck an der Matrizenform 10 eingestellt ist. Dies ist auf das zusätzliche Volumen des Vakuumtanks zurückzuführen, dass neben der Matrizenform 10 zusätzlich vakuumiert werden muss.

Durch die mittels des Vakuumtanks 25 verlangsamte Druckreduzierung an der Matrizenmulde zum Tiefziehen der Folie 2 soll vermieden werden, dass der Unterdruck schlagartig bereitgestellt wird, und die Folie 2 durch die daraus resultierende, hohe Umformgeschwindigkeit beschädigt wird. Folglich wird der Matrizenplatte 9, 9' in einem ersten Schritt die Folie 2 zugeführt. Anschließend wird die Folie 2 zwischen der Matrizenplatte 9, 9' und der Druckplatte 13, 13' eingeklemmt. Mit dem Beginn des Tiefziehvorgangs liegt an der Matrizenform 10 ein Startdruck an. Der Startdruck liegt bevorzugt in einem Bereich zwischen 1.0 bar bis 0,8 bar. Besonders bevorzugt entspricht der Startdruck dem atmosphärischen Umgebungsdruck, also in etwa 1 bar. Während des Tiefziehvorganges wird durch die Schalteinheit 22 der Formvakuumeinrichtung 20 ein Druckverlauf an der Matrizenform 10 generiert. Dabei wird der Druck ausgehend vom Startdruck innerhalb einer Zeitspanne auf einen minimalen Enddruck reduziert. Die Zeitspanne entspricht also der Dauer, die dafür benötigt wird, den Druck in der Matrizenform 10 vom Startdruck bis hin zum Enddruck zu reduzieren.

Der Enddruck liegt bevorzugt in einem Bereich von 0,05 bar bis 0,5bar, vorzugsweise in einem Bereich von 0,1bar bis 0,4bar, vorzugsweise in einem Bereich von 0,15bar bis 0,35bar. Besonders bevorzugt liegt der Enddruck bei in etwa 0,3 bar. Durch den anliegenden Unterdruck wird die Folie 2 in die Matrizenform 10 tiefgezogen. Die Zeitspanne zwischen dem Startdruck und dem Enddruck entspricht in vorteilhafter Weise der maximalen Prozesszeit, die an einer anderen Station der Verpackungsmaschine 1, beispielsweise der Füllstation 5 oder der Siegelstation 6 benötigt wird. Die Zeitspanne zwischen dem Startdruck und dem Enddruck beträgt mindestens 0,5s, vorzugsweise mindestens 0,75s, besonders bevorzugt mindestens 1,0s, vorteilhaft mindestens 1,25s, besonders vorteilhaft mindestens 1,5s. Die Zeitspanne ist bevorzugt nicht größer als 2s, vorzugsweise nicht größer als 1,75s, besonders bevorzugt nicht größer als 1,5s.

Besonders bevorzugt wird das Ventil 23 der Formvakuumeinrichtung 20 mittels der Steuereinrichtung 24 mit einer gepulsten Signalfolge angesteuert. Folglich schaltet das Ventil entsprechend der Signalfolge zwischen der geschlossenen Stellung und der geöffneten Stellung hin und her. Die sich daraus ergebende, durchschnittliche Schaltstellung entspricht einer effektiven Schaltstellung. Die effektive Schaltstellung kann durch eine Pulsweitenmodulation und/oder eine Frequenzmodulation der Betriebsimpulse der Signalfolge eingestellt werden. Somit kann der Druck an der Matrizenform 10 kontinuierlich eingestellt werden.

Die Schalteinheit 22 nach Fig. 2 ist folglich in einer ersten Variante derart ausgebildet, dass auch als effektive Schaltstellungen des Schaltventils 23 lediglich zwei diskret schaltbare Schaltstellungen vorgesehen sind. Eine Pulsweitenmodulation und/oder eine Frequenzmodulation der Betriebsimpulse der Signalfolge erfolgt nicht. In dieser ersten Variante der Schalteinheit 22 ist ein dem Schaltventil 23 nachgelagerter Vakuumtank 25 zwingend erforderlich, um einen verlangsamten Druckaufbau an der Matrizenform 10 zu erzielen.

Die Schalteinheit 22 nach Fig. 2 ist in einer zweiten Variante derart ausgebildet, dass der an der mindestens einen Matrizenform 10 anliegende Druck durch die Schalteinheit 22 kontinuierlich einstellbar ist. Hierzu wird das Schaltventil 23 durch die Steuereinrichtung 24 mittels gepulster Signalfolge angesteuert. Durch die Möglichkeit, die effektive Schaltstellung kontinuierlich einstellen zu können, kann auch der effektive Strömungsquerschnitt des Ventils eingestellt werden. Mit der Einstellung des effektiven Strömungsquerschnittes des Ventils kann auch der Druck an der Matrizenform 10 kontinuierlich eingestellt werden. In der zweiten Variante ist der Vakuumtank 25 nicht zwingend erforderlich, um die Reduzierung des Druckes bzw. die Erhöhung des Unterdruckes zu verlangsamen. Selbstverständlich kann auch vorgesehen sein, das Ventil 23 kontinuierlich einstellbar auszubilden und zusätzlich dem Ventil nachgeschaltet ein Vakuumtank 25 vorzusehen. In einer solchen Variante besteht ein weiterer Effekt darin, dass die gepulste Ansteuerung des Ventils 23 durch den Vakuumtank 25 geglättet wird. Optional kann auch ein Vakuumtank dem Ventil 23 vorgeschaltet sein.

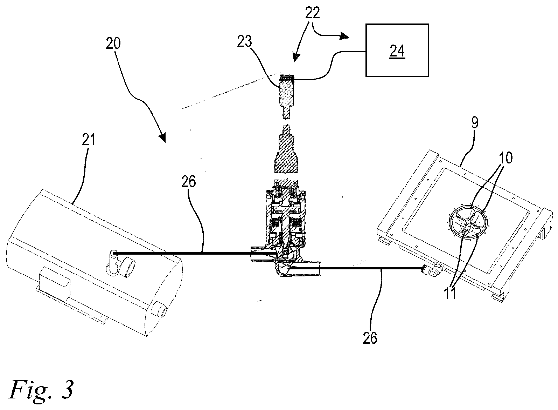

Fig. 3 zeigt eine weitere Ausführungsform der Formvakuumvorrichtung 20. Das Ventil 23 der Formvakuumvorrichtung 20 ist als ein Stetigventil ausgebildet. Demnach ist die Schaltstellung des Ventils 23 kontinuierlich einstellbar. Somit ist durch das Ventil 23 auch der Strömungsquerschnitt im Ventil 23 und somit auch der Druck an der Matrizenform 10 kontinuierlich einstellbar. Ferner umfasst die Formvakuumvorrichtung 20 bevorzugt die Steuereinrichtung 24, die das Ventil 23 ansteuert. Das Ventil 23 kann somit auch während des Tiefziehprozesses beliebig eingestellt werden, wodurch der Druckverlauf an der Matrizenform 10 angepasst werden kann. Eine gepulste Ansteuerung des Ventils ist nicht erforderlich. Es kann in einer alternativen Ausgestaltung jedoch auch zweckmäßig sein, dass das als Stetigventil ausgebildete Ventil 23 über die Steuereinrichtung 24 gepulst angesteuert wird. Selbstverständlich kann auch die Ausführung der Formvakuumeinrichtung 20 nach Fig. 3 in einer bevorzugten Ausführung mit einem Vakuumtank 25 versehen sein.

Das Stetigventil ist in einer bevorzugten Ausführung als ein Druckventil, ein Drosselventil oder ein Stromregelventil ausgebildet. In einer besonders bevorzugten Ausführung ist das Stetigventil ein Wegeventil, wobei das Wegeventil insbesondere als Proportionalventil, als Regelventil oder als Servoventil ausgebildet ist.

Der Druckverlauf an der Matrizenform 10 zwischen dem Startdruck und dem Enddruck entspricht über die gesamte Zeitspanne vorzugsweise einer stetigen, abfallenden Funktion. Der Druckverlauf an der Matrizenform 10 zwischen dem Startdruck und dem Enddruck entspricht über die gesamte Zeitspanne vorzugsweise in etwa einer abfallenden Exponentialfunktion.

## Patentansprüche

1. Tiefziehvorrichtung zum Tiefziehen von Folie,
umfassend:
eine Anordnung von mehreren Matrizenplatten (9, 9'), die durch einen Transporteur (7) in einer Umlaufbahn antreibbar ist,
wobei jede Matrizenplatte (9, 9') mindestens eine Matrizenform (10) aufweist, und mit mindestens einer Formvakuumeinrichtung (20), wobei die Formvakuumeinrichtung (20) mindestens eine Vakuumquelle (21) zur Bereitstellung eines Vakuums umfasst,
und wobei die mindestens eine Vakuumquelle (21) über einen Vakuumkanal (26) mit der mindestens einen Matrizenform (10) einer jeden Matrizenplatte (9, 9') verbindbar ist,
**dadurch kennzeichnet, dass** die Formvakuumeinrichtung (20) mindestens eine der Vakuumquelle (21) zugeordnete Schalteinheit (22) umfasst, wobei die Schalteinheit (22) ein funktional zwischen der Vakuumquelle (21) und der mindestens einen Matrizenform (10) angeordnetes Ventil (23) umfasst, und
wobei die Schalteinheit (22) in einer ersten Variante derart ausgebildet ist, dass der an der mindestens einen Matrizenform (10) anliegende Druck durch die Schalteinheit (22) kontinuierlich einstellbar ist und dass die Schalteinheit (22) in einer zweiten Variante einen funktional zwischen dem Ventil (23) und der mindestens einen Matrizenform (10) angeordneten Vakuumtank (25) umfasst.

2. Tiefziehvorrichtung nach Anspruch 1,
**dadurch gekennzeichnet, dass** die Schalteinheit (22) eine Steuereinrichtung (24) aufweist, wobei die Steuereinrichtung derart ausgebildet ist, dass das Ventil (23) durch die Steuereinrichtung (24) über eine gepulste Signalfolge ansteuerbar ist.

3. Tiefziehvorrichtung nach Anspruch 2,
**dadurch gekennzeichnet, dass** die Steuereinrichtung derart ausgebildet ist, dass die Signalfolge mehrere Betriebsimpulse aufweist, wobei eine effektive Schaltstellung des Ventils (23) kontinuierlich über die Variation der Signaldauer der Betriebsimpulse und/oder über die Variation der Frequenz der Signalfolge einstellbar ist.

4. Tiefziehvorrichtung nach einem der Ansprüche 1 bis 3,
**dadurch gekennzeichnet, dass** das Ventil (23) als ein Stetigventil ausgebildet ist.

5. Tiefziehvorrichtung nach Anspruch 4,
**dadurch gekennzeichnet, dass** das Stetigventil ein Druckventil, ein Drosselventil oder ein Stromregelventil ist.

6. Tiefziehvorrichtung nach Anspruch 4,
**dadurch gekennzeichnet, dass** das Stetigventil ein Wegeventil ist, wobei das Wegeventil insbesondere als Proportionalventil, als Regelventil oder als Servoventil ausgebildet ist.

7. Tiefziehvorrichtung nach Anspruch 2 oder 3,
**dadurch gekennzeichnet, dass** das Ventil (23) als ein diskret schaltendes Wegeventil ausgebildet ist.

8. Tiefziehvorrichtung nach einem der Ansprüche 1 bis 7,
**dadurch gekennzeichnet, dass** die Formvakuumeinrichtung (20) einen der ersten Variante der Schalteinheit (22) zugeordneten Vakuumtank (25) aufweist.

9. Tiefziehvorrichtung nach Anspruch 8,
**dadurch gekennzeichnet, dass** der Vakuumtank (25) funktional zwischen der Vakuumquelle (21) und dem Ventil (23) angeordnet ist.

10. Tiefziehvorrichtung nach Anspruch 8,
**dadurch gekennzeichnet, dass** der Vakuumtank (25) funktional zwischen dem Ventil (23) und der mindestens einen Matrizenform (10) angeordnet ist.

11. Verpackungsmaschine zur Herstellung von Folienverpackungen mit einer Tiefziehvorrichtung (12) nach einem der Ansprüche 1 bis 10.

12. Verfahren zum Tiefziehen von Folie zur Herstellung von Folienverpackungen mit einer Verpackungsmaschine nach Anspruch 11,
wobei mindestens einer Matrizenplatte (9, 9') eine Folie (2) zugeführt wird, wobei mit Beginn des Tiefziehvorgangs ein Startdruck in der Matrizenform (10) anliegt, wobei der Startdruck in einem Bereich von 1,0 bar bis 0,8 bar liegt, wobei während des Tiefziehvorganges durch die Schalteinheit (22) der Formvakuumeinrichtung (20) ein Druckverlauf an der Matrizenform (10) generiert wird, in dem der Druck an der Matrizenform (10) ausgehend von dem Startdruck innerhalb einer Zeitdauer auf einen minimalen Enddruck reduziert wird, wodurch die Folie (2) in die Matrizenform (10) der Matrizenplatte (9, 9') tiefgezogen wird, und
wobei der Enddruck in einem Bereich von 0,05 bar bis 0,5bar, vorzugsweise in einem Bereich von 0,1bar bis 0,4bar, vorzugsweise in einem Bereich von 0,15bar bis 0,35bar liegt, und
wobei die Zeitspanne zwischen dem Startdruck und dem Enddruck mindestens 0,5s, vorzugsweise mindestens 0,75s, besonders bevorzugt mindestens 1,0s, vorteilhaft mindestens 1,25s, besonders vorteilhaft mindestens 1,5s beträgt.

13. Verfahren nach Anspruch 12,
**dadurch gekennzeichnet, dass** die Zeitspanne zwischen dem Startdruck und dem Enddruck nicht größer als 2,0s, vorzugsweise nicht größer als 1,75s, bevorzugt nicht größer als 1,5s ist.

## Claims

1. Thermoforming device for thermoforming a film,
comprising:
an arrangement of multiple die plates (9, 9') which is drivable by a conveyor (7) on a circulating path,
wherein each die plate (9, 9') has at least one mould (10), and having at least one moulding-vacuum device (20), wherein the moulding-vacuum device (20) comprises at least one vacuum source (21) for providing a vacuum,
and wherein the at least one vacuum source (21) can be connected via a vacuum channel (26) to the at least one mould (10) of each die plate (9, 9'),
**characterized in that** the moulding-vacuum device (20) comprises at least one switching unit (22) assigned to the vacuum source (21), wherein the switching unit (22) comprises a valve (23) arranged in functional terms between the vacuum source (21) and the at least one mould (10), and wherein the switching unit (22) in a first variant is designed in such a way that the pressure prevailing in the at least one mould (10) can be continuously adjusted by the switching unit (22) and **in that** the switching unit (22) in a second variant comprises a vacuum tank (25) arranged in functional terms between the valve (23) and the at least one mould (10).

2. Thermoforming device according to Claim 1,
**characterized in that** the switching unit (22) has a control device (24), wherein the control device is designed in such a way that the valve (23) can be actuated by the control device (24) via a pulsed signal sequence.

3. Thermoforming device according to Claim 2,
**characterized in that** the control device is designed in such a way that the signal sequence comprises multiple operating pulses, wherein an effective switching position of the valve (23) can be continuously adjusted by varying the signal duration of the operating pulses and/or by varying the frequency of the signal sequence.

4. Thermoforming device according to one of Claims 1 to 3,
**characterized in that** the valve (23) is in the form of a continuous valve.

5. Thermoforming device according to Claim 4,
**characterized in that** the continuous valve is a pressure valve, a throttle valve or a flow regulating valve.

6. Thermoforming device according to Claim 4,
**characterized in that** the continuous valve is a directional control valve, wherein the directional control valve is in particular in the form of a proportional valve, a regulating valve or a servo valve.

7. Thermoforming device according to Claim 2 or 3,
**characterized in that** the valve (23) is in the form of a discrete directional control valve.

8. Thermoforming device according to one of Claims 1 to 7,
**characterized in that** the moulding-vacuum device (20) has a vacuum tank (25) associated with the first variant of the switching unit (22).

9. Thermoforming device according to Claim 8,
**characterized in that** the vacuum tank (25) is arranged in functional terms between the vacuum source (21) and the valve (23).

10. Thermoforming device according to Claim 8,
**characterized in that** the vacuum tank (25) is arranged in functional terms between the valve (23) and the at least one mould (10).

11. Packaging machine for producing film packaging, having a thermoforming device (12) according to one of Claims 1 to 10.

12. Method for thermoforming a film for producing film packaging by a packaging machine according to Claim 11,
wherein a film (2) is fed to at least one die plate (9, 9'), wherein, at the start of the thermoforming operation, an initial pressure prevails in the mould (10), wherein the initial pressure ranges from 1.0 bar to 0.8 bar, wherein, during the thermoforming process, the switching unit (22) of the moulding-vacuum device (20) generates a pressure profile in the mould (10) in which the pressure in the mould (10) is reduced from the initial pressure to a minimum final pressure within a period of time, as a result of which the film (2) is drawn into the mould (10) of the die plate (9, 9'), and
wherein the final pressure ranges from 0.05 bar to 0.5 bar, preferably ranges from 0.1 bar to 0.4 bar, preferably ranges from 0.15 bar to 0.35 bar, and wherein the period of time between the initial pressure and the final pressure is at least 0.5 s, preferably at least 0.75 s, particularly preferably at least 1.0 s, advantageously at least 1.25 s, particularly advantageously at least 1.5 s.

13. Method according to Claim 12,
**characterized in that** the period of time between the initial pressure and the final pressure is no more than 2.0 s, preferably no more than 1.75 s, preferably no more than 1.5 s.

## Revendications

1. Dispositif d'emboutissage pour l'emboutissage de film,
comprenant :
un agencement de plusieurs plaques de matrice (9, 9') qui peut être entraîné dans une voie de circulation par un transporteur (7),
chaque plaque de matrice (9, 9') présentant au moins un moule de matrice (10), et avec au moins un appareil de mise sous vide de moule (20), l'appareil de mise sous vide de moule (20) comprenant au moins une source de vide (21) pour fournir un vide,
et l'au moins une source de vide (21) pouvant être reliée à l'au moins un moule de matrice (10) de chaque plaque de matrice (9, 9') par l'intermédiaire d'un canal de vide (26),
**caractérisé en ce que** l'appareil de mise sous vide de moule (20) comprend au moins une unité de commutation (22) associée à la source de vide (21), l'unité de commutation (22) comprenant une soupape (23) agencée fonctionnellement entre la source de vide (21) et l'au moins un moule de matrice (10), et l'unité de commutation (22) étant réalisée dans une première variante de telle sorte que la pression appliquée sur l'au moins un moule de matrice (10) soit réglable en continu par l'unité de commutation (22) et l'unité de commutation (22) comprenant dans une deuxième variante un réservoir à vide (25) agencé fonctionnellement entre la soupape (23) et l'au moins un moule de matrice (10).

2. Dispositif d'emboutissage selon la revendication 1,
**caractérisé en ce que** l'unité de commutation (22) présente un appareil de commande (24), l'appareil de commande étant réalisé de telle sorte que la soupape (23) peut être commandée par l'appareil de commande (24) par l'intermédiaire d'une séquence de signaux pulsés.

3. Dispositif d'emboutissage selon la revendication 2,
**caractérisé en ce que** l'appareil de commande est réalisé de telle sorte que la séquence de signaux présente plusieurs impulsions de fonctionnement, une position de commutation effective de la soupape (23) pouvant être réglée en continu par l'intermédiaire de la variation de la durée de signaux des impulsions de fonctionnement et/ou par l'intermédiaire de la variation de la fréquence de la séquence de signaux.

4. Dispositif d'emboutissage selon l'une quelconque des revendications 1 à 3,
**caractérisé en ce que** la soupape (23) est réalisée sous la forme d'une soupape continue.

5. Dispositif d'emboutissage selon la revendication 4,
**caractérisé en ce que** la soupape continue est une soupape de pression, une soupape d'étranglement ou une soupape de régulation de débit.

6. Dispositif d'emboutissage selon la revendication 4,
**caractérisé en ce que** la soupape continue est une soupape directionnelle, la soupape directionnelle étant notamment réalisée sous forme de soupape proportionnelle, sous forme de soupape de régulation ou sous forme de servosoupape.

7. Dispositif d'emboutissage selon la revendication 2 ou la revendication 3,
**caractérisé en ce que** la soupape (23) est réalisée sous la forme d'une soupape de distribution à commutation discrète.

8. Dispositif d'emboutissage selon l'une quelconque des revendications 1 à 7,
**caractérisé en ce que** l'appareil de mise sous vide de moule (20) présente un réservoir à vide (25) associé à la première variante de l'unité de commutation (22).

9. Dispositif d'emboutissage selon la revendication 8,
**caractérisé en ce que** le réservoir à vide (25) est agencé fonctionnellement entre la source de vide (21) et la soupape (23).

10. Dispositif d'emboutissage selon la revendication 8,
**caractérisé en ce que** le réservoir à vide (25) est agencé de manière fonctionnelle entre la soupape (23) et au moins un moule de matrice (10).

11. Machine d'emballage pour la fabrication d'emballages en film avec un dispositif d'emboutissage (12) selon l'une quelconque des revendications 1 à 10.

12. Procédé d'emboutissage de film pour la fabrication d'emballages en film avec une machine d'emballage selon la revendication 11,
un film (2) étant amené à au moins une plaque de matrice (9, 9'), une pression initiale étant appliquée dans le moule de matrice (10) au début du processus d'emboutissage, la pression initiale étant située dans une plage de 1,0 bar à 0,8 bar, une courbe de pression étant générée sur le moule de matrice (10) pendant le processus d'emboutissage par l'unité de commutation (22) de l'appareil de mise sous vide de moule (20) par le fait que la pression au niveau du moule de matrice (10) est réduite à une pression finale minimale à partir de la pression initiale dans les limites d'un laps de temps, moyennant quoi le film (2) est embouti dans le moule de matrice (10) de la plaque de matrice (9, 9'), et la pression finale étant située dans une plage de 0,05 bar à 0,5 bar, de préférence dans une plage de 0,1 bar à 0,4 bar, de préférence dans une plage de 0,15 bar à 0,35 bar, et
la durée entre la pression initiale et la pression finale étant d'au moins 0,5 s, de préférence d'au moins 0,75 s, de manière particulièrement préférée d'au moins 1,0 s, de manière avantageuse d'au moins 1,25 s, de manière particulièrement avantageuse d'au moins 1,5 s.

13. Procédé selon la revendication 12,
**caractérisé en ce que** la durée entre la pression initiale et la pression finale n'est pas supérieur à 2,0 s, de préférence pas supérieur à 1,75 s, et de préférence pas supérieur à 1,5 s.
